Europäisches Patentamt

(19) European Patent Office

Office européen des brevets

(11) EP 0 743 841 B1

## (12) FASCICULE DE BREVET EUROPEEN

(45) Date de publication et mention
de la délivrance du brevet:
**23.09.1998 Bulletin 1998/39**

(21) Numéro de dépôt: **95907719.9**

(22) Date de dépôt: **30.01.1995**

(51) Int. Cl.⁶: **A61F 9/08**, G01B 11/24,
G09B 21/00

(86) Numéro de dépôt international:
**PCT/FR95/00103**

(87) Numéro de publication internationale:
**WO 95/21595 (17.08.1995 Gazette 1995/35)**

(54) **PROTHESE VISUELLE POUR NON-VOYANTS**

SEHHILFE FÜR BLINDE

VISUAL PROSTHESIS FOR THE VISUALLY CHALLENGED

(84) Etats contractants désignés:
**BE CH DE FR GB IT LI SE**

(30) Priorité: **08.02.1994 FR 9401488**

(43) Date de publication de la demande:
**27.11.1996 Bulletin 1996/48**

(73) Titulaire: **Farcy, René Alfred**
**91370 Verrières Le Buisson (FR)**

(72) Inventeur: **Farcy, René Alfred**
**91370 Verrières Le Buisson (FR)**

(56) Documents cités:
WO-A-81/01512          DE-A- 2 500 458
DE-A- 2 513 593        US-A- 3 198 952
US-A- 3 594 823        US-A- 3 704 378

• IEEE TRANSACTIONS ON PATTERN ANALYSIS
AND MACHINE INTELLIGENCE, vol.PAMI 5, no.2,
1983 pages 122 - 139 JARVIS 'A PERSPECTIVE
ON RANGE FINDING TECHNIQUES FOR
COMPUTER VISION' cité dans la demande

**Description**

La présente invention est destinée à la détection optoélectronique à trois dimensions pour non voyants des profils, réflectivités et mouvements d'obstacles avec communication immédiate de l'information de manière tactile ou sonore. Les distances, profils, réflectivités et mouvements des obstacles sont acquis par des techniques de profilométrie optique active de grande profondeur de champ et de haute résolution angulaire dans une gamme de distances allant de quelques dizaines de centimètres à plusieurs dizaines de mètres, éventuellement étendue à quelques centaines de mètres. Les données sont ensuite transmises en temps réel au non-voyant de manière tactile ou sonore, soit par une interface tactile constituée d'une matrice de cellules électro- ou vibrotactiles localisée sur une partie du corps, soit par une gamme de sons. Le système est portable et autonome, positionnable pour la partie optique au niveau du poignet ou sur la visière d'une casquette, pour la partie électronique et piles dans une sacoche de ceinture, l'interface tactile peut être située par exemple sur l'estomac, le ventre ou les cuisses ; l'interface sonore peut-être constituée d'un petit haut parleur positionné par exemple sur le col de la chemise, ou d'auriculaires.

Des systèmes de mesure de distance d'obstacles à ultrasons ont été développés pour les non-voyants. Leur faible résolution angulaire (plusieurs degrés), la durée élevée de la mesure, son domaine restreint de fiabilité dû aux échos parasites ne permettent pas la profilométrie, c'est à dire le perfectionnement du dispositif afin d'effectuer une succession de mesures significatives rapprochées dans le temps et l'espace détaillant l'obstacle. De plus l'information sur la distance rapportée en général par un signal sonore intermittent présente le double inconvénient d'être sommaire, de type tout ou rien et de perturber fortement la source essentielle d'information sur l'environnement qui est le son pour un non-voyant. L'information sur la réflectivité (ou, niveau de gris) de l'obstacle n'est pas accessible par la technique des ultrasons. La portée trop faible de ces capteurs associée à un temps de mesure trop élevé ne permet pas d'acquérir facilement les vitesses de déplacements d'obstacles ni de déterminer la direction du mouvement.

L'interfaçage tactile passif est à la base de l'alphabet Braille. L'interfaçage tactile actif (transmettant des informations en temps réel sur une situation variant dans le temps) a été expérimenté depuis une trentaine d'années afin de permettre aux non-voyants à l'époque (travaux de Bach y Rita, Collins, Saunders) d'effectuer certaines tâches industrielles répétitives bien définies (insertion de composants dans des circuits imprimés par exemple). L'image est acquise par une caméra vidéo miniature et transmise à la peau par une matrice de cellules tactiles (référence : brevet US 3594823, C.C.Collins). Des recherches sur des senseurs vibrotactiles ou électrotactiles sont également en cours pour l'identification à partir d'images vidéo à deux dimensions de situations spatiales à trois dimensions. Une telle approche se heurte à des problèmes de saturation de la capacité de transmission d'informations par la peau : en effet le nombre de cellules tactiles pouvant être séparées par la personne est limité. L'identification du contenu des images par un nombre limité de points n'est possible que dans des cas très particuliers. Un prétraitement informatique de l'image type reconnaissance de formes est long et complexe et nécessite le couplage à un ordinateur puissant. Un prétraitement simple type contour des formes ne résout pas les problèmes d'identification des situations réelles, l'information sur le relief étant quasiment absente. L'interactivité de l'analyse de l'image par la commande d'un zoom afin d'explorer certaines parties est lente, matériellement lourde et ne permet pas de traiter le cas d'une situation en mouvement (références : M. Adjouadi, Journal of Rehabilitation Research and Development, 1992 29(2) : 57-76, ISSN : 0748-7711 ; Easton-RD, Optometry and Vision Science 1992 jan, 69(1) :3-14 ISSN 1040-5488 ; Kaczmarek-KA, Webster-JG, Bach-y-Rita P, Tompkins, IEEE Transactions on Biomedical Engineering 1991 jan, 38(1) : 1-16).

Les systèmes optiques d'acquisition des données spatiales à trois dimensions sur l'environnement ont fait l'objet de développements importants dans les domaines suivants :

- Télémètres à usage géodésique et militaire.
- Télémètres gérant les camescopes et appareils photographiques de type autofocus.
- Têtes de guidage de bras de robots.
- Contrôle de qualité et mesure des déformations de surfaces.

Les principales techniques utilisées sont : la disparité stéréographique ; le gradient de texture ; le balayage de caméra ; la télémétrie par triangulation, par comparaison de phase, impulsionnelle à temps de vol ; l'interférométrie ; les techniques de Moiré etc.

Les télémètres géodésiques utilisant la télémétrie par comparaison de phase ont une précision pouvant descendre à l'ordre de grandeur du millimètre pour les grandes distances, précision excessive pour les besoins des non-voyants. Le temps d'acquisition est par contre de l'ordre de la seconde, trop long pour pouvoir dégager rapidement un profil. Les télémètres impulsionnels militaires ne fonctionnent qu'aux grandes portées et se soucient peu de la sécurité oculaire.

Des télémètres impulsionnels à sécurité oculaire ont été récemment développé (Leica modèle Geovid 7x42 BDA, GEC Marconi modèles PLD 40, CW AND 20), leur portée se situe typiquement entre 25 et 1000 mètres, le précision est de l'ordre du mètre et le temps d'acquisition de l'ordre de quelques dixièmes de seconde. Ils ne correspondent pas aux besoins des non-voyants à cause de la valeur trop élevée de la portée minimale et du temps d'acquisition encore trop long.

Les capteurs de distance pour les systèmes "type autofocus" des appareils photographiques et camescopes ont une profondeur de champ typiquement de un à dix mètres, mais leur très faible résolution angulaire (typiquement de l'ordre du champ de vision de la prise de vue) ne permet pas la profilométrie, de plus, le nombre de pas sur la gamme complète de mesure est très limité (références : documentation constructeur Hamamatsu modèle H2476-01 par exemple).

Le cahier des charges des systèmes profilométriques optiquement actifs (domaine de la robotique et de la mesure des états de surfaces) et les solutions techniques apportées sont en général axées sur une haute précision pouvant être de l'ordre du micromètre (pour les défauts d'une surface), se payant par une faible profondeur de champ excédant difficilement quelques divines de centimètres (pour les têtes de guidage de bras de robots par exemple, références : R.Jarvis, IEEE vol, PAMI 5, n°2 p122-139, 1983 ; G. Seitz, Optoelektronik in der tecknik p 235-240 Springer 1990 ; Brevet français n° WO 87/07942, O. Hignette).

Divers systèmes optiques passifs (utilisant la lumière du jour) ou actifs (à base de sources lumineuses à incandescence ou de diodes électroluminescentes) à usage des non-voyants ont été brevetés (Witte Wolfgang, brevet DE 2513593(1) ; Morse Robb, brevet US 3704378(1) ; T.A. Benham, brevet US 3,198,952). Leur développement s'est heurté principalement aux difficultés suivantes : trop faible résolution angulaire, encombrement excessif, manque d'immunité à l'éclairement diurne, faible interactivité, portée trop limitée etc. Le Brevet US 3,198,952 présente un capteur optique à triangulation signalant la présence éventuelle d'un obstacle dans une certaine direction à moins d'une certaine distance limite fixée (pouvant être choisie parmi 2 ou 3 valeurs). Cette information binaire étant transmise par une pointe mécanique unique vibrant ou non. Ce système assurant une frontière de protection n'informe pas sur la stucture géométrique de l'obstacle (même si trois systèmes sont superposés dans trois directions voir figure 24), ni sur son mouvement relatif et ne permet donc pas ni de l'identifier même sommairement, ni de l'éviter efficacement.

Les systèmes de mesure de vitesse ont été largement développés à partir de l'utilisation de l'effet Doppler (radars divers utilisés par la police routière par exemple). A partir d'un point de mesure on n'obtient que l'une des composantes de la vitesse, ce qui ne permet pas de connaître la trajectoire du mobile. L'information sur la vitesse ne peut-être utile pour un non-voyant que si elle s'associe a la mesure de la distance du mobile.

De telles solutions ne sont pas adaptées à un système autonome réalisant l'acquisition de données sur l'espace et sur son mouvement exploitables par des non-voyants.

Le présent système de profilométrie optique active, interfacé tactilement ou de manière sonore, pour non-voyants propose une solution aux problèmes techniques suivants :

- Pouvoir accéder aux données de l'environnement dans une plage de distances allant de la dizaine de centimètres à quelques dizaines de mètres.
- Pouvoir détecter une voiture rapide à quelques centaines de mètres.
- Obtenir sur cet environnement les données suivantes :

   * Profil en distance et réflectivité des obstacles avec une résolution angulaire pouvant être ajustée entre le $1/100^e$ de degré et quelques degrés, une précision de l'ordre du pour-cent sur les distances, le champ angulaire accessible en une seconde étant de plusieurs dizaines de degrés.
   * Direction et vitesse pour les objets en mouvement avec un compromis entre l'exploration angulaire et la durée d'acquisition de l'information.
   * Pouvoir transmettre plusieurs dizaines d'informations par seconde au non-voyant, une information étant par exemple constituée d'une mesure de distance et réflectivité d'un point de l'environnement avec une résolution angulaire d'un degré.

- L'appareillage ne doit pas entraver la liberté de mouvement ni perturber fortement l'espace sonore autre source d'informations.
- Présenter un lien facilement assimilable par le non-voyant entre les données spatiales à trois dimensions et les donnés tactiles (ou sonores) tout en utilisant un nombre restreint de cellules tactiles (ou sonores).
- Satisfaire aux normes de sécurité, en particulier sur le rayonnement laser.

La solution apportée par l'invention est composée de un ou deux profilomètres optiques actifs compacts de forte profondeur de champ et haute résolution angulaire, associés à un circuit électronique de traitement des données en temps réel et à un système de transmission tactile ou sonore, également en temps réel, de l'information (interface tactile ou sonore).

La méthode consiste dans un premier temps à pointer le faisceau lumineux collimaté (faisceau laser par exemple) dans une direction. L'intersection du faisceau avec le premier obstacle sur sa trajectoire produit un point lumineux. Le système de réception optique détermine la distance à laquelle se trouve le point lumineux ainsi que sa réflectivité à la longueur d'onde du faisceau. Ces données sont acquises en une durée pouvant descendre à l'ordre de grandeur de quelques millisecondes. Le point lumineux est alors déplacé, et les mesures reprises. Pendant le temps d'une mesure le système électronique de gestion traite et transmet les données de la mesure précédente sur la peau par l'intermédiaire de l'interface tactile (ou à l'ouïe par l'intermédiaire d'un son). Le faisceau étant très étroit, il est possible de répéter la mesure dans des directions proches par balayage du faisceau et de dégager avec détails des lignes de coupe de l'obstacle en distance et réflectivité. Ces lignes de coupe correspondent à l'intersection de la surface balayée par le faisceau lumineux collimaté avec la face accessible au faisceau des obstacles. La détection du mouvement se fait soit par répétition de la mesure dans une même direction, soit par comparaison des données obtenues entre deux lignes de coupe de même orientation, balayées successivement dans le temps. Ces lignes de coupe sont ainsi transmises en temps réel à la peau (ou à l'ouïe) au rythme du balayage du faisceau laser, point par point.

L'information transmise à la peau ou à l'ouïe est codée sur plusieurs rangées de cellules tactiles ou sonores. Ceci a pour but de transmettre des données de haute résolution spatiale et angulaire sur la ligne de coupe en utilisant un nombre restreint de cellules tenant compte de la limitations en résolution spatiale et temporelle de la peau ou de l'ouïe. Le code est étudié afin d'être facilement interprétable par le cerveau.

Les profilomètres sont essentiellement constitués d'un émetteur de lumière (diode laser collimatée) associé, par l'intermédiaire de composants optiques (lentilles, filtres, miroirs), à un ou plusieurs détecteurs ponctuels, linéaires ou bidimensionnels de lumière (photodiodes, barrettes ou matrices CCD, PSD linéaires ou bidimensionnels).

A titre d'exemple non limitatif les profilomètres sont insérables dans une casquette ou sur le poignet. Le circuit électronique de traitement des données peut-être inséré dans une sacoche de ceinture. L'interface tactile peut-être constituée d'une matrice souple de cellules électro- ou vibrotactiles appliquée sur une partie du corps (ventre, estomac, cuisses etc...), elle peut aussi être constituée d'une matrice d'électrodes sous cutanées, éventuellement placées dans le cortex visuel. L'interface sonore peut être constituée d'un petit haut parleur placé près de l'oreille ou d'une paire d'écouteurs. La liaison entre les différents éléments se fait par fils.

Le balayage du faisceau laser se réalise de diverses façons. La première possibilité consiste à avoir un faisceau fixe par rapport au profilomètre et ce sont les mouvements du support du profilomètre (poignet du non-voyant par exemple) qui déterminent la ligne de coupe. Dans la seconde possibilité le faisceau est balayé automatiquement dans un plan fixe par rapport à celui du profilomètre (orthogonal par exemple) d'un angle réglable (de 50 à 60° par exemple), les mouvements de la partie du corps supportant le profilomètre agit à ce moment sur l'orientation de la ligne de coupe, les mouvements à réaliser dans ce cas sont particulièrement discrets.

Dans tous les cas, le non-voyant est mâitre à tout instant de l'orientation de la ligne de coupe par le biais de celle du profilomètre. Le système est donc de lui-même interactif : les directions d'explorations dépendant de l'analyse faite par le non-voyant des informations antérieures. L'exploration d'un obstacle (ou d'un environnement de manière plus générale) par lignes de coupe successives permet de dégager son profil en distance, réflectivité et mouvement sur les trois dimensions de l'espace.

L'acquisition des distances et réflectivités se fait par un profilomètre laser de base à triangulation à sécurité oculaire (classe I ou II selon la norme IEC 825) à très forte profondeur de champ, auquel s'associe en option un second profilomètre laser à temps de vol également à sécurité oculaire, dis le cadre de compromis menant à des durées d'acquisition de mesure courtes devant la seconde.

Le profilomètre de base utilise la triangulation optique active à émission continue. La source de lumière est une diode laser collimatée de divergence très faible (inférieure au milliradian par exemple), émettant une puissance lumineuse P continue à la longueur d'onde $\lambda_0$. Ce faisceau produit une tâche lumineuse A sur le premier obstacle rencontré qui rétrodiffuse la lumière. Le récepteur est constitué d'une lentille (L) et d'une barrette CCD placée dans le plan focal de (L). La tâche A est projetée à travers la lentille (L) en une tâche lumineuse A' localisée sur la barrette CCD. La base B (distance entre l'axe du faisceau émis et celui de la partie réceptrice) étant fixe, l'abscisse A' de la zone éclairée de la barrette CCD donne la distance. L'amplitude lumineuse recueillie sur la tâche A', jointe à la valeur de la distance et à celle de la puissance de la source lumineuse donne la réflectivité de l'obstacle à la longueur d'onde $\lambda_0$.

En cas de journée ensoleillée, à l'extérieur, le détecteur linéaire de lumière peut recevoir un signal parasite saturant du jour. Afin d'éliminer une grande partie du bruit du jour, on place avant la lentille un filtre interférentiel de longueur d'onde centrale égale à celle d'émission de la diode laser. La bande passante du filtre est suffisamment large pour laisser passer avec la même transmission les rayons d'incidence variable provenant de la tâche de lumière sur l'obstacle à différentes distances.

La barrette CCD fonctionne en deux phases : un temps de pose $\tau$ où l'énergie est recueillie, un temps de vidage $\tau'$ où l'information est extraite. Cette information est un signal temporel contenant un pic dont la position temporelle permet d'accéder à la position de l'image. La distance se déduit alors du temps séparant le début du vidage de la barrette de l'instant d'apparition du centre du pic obtenu par le biais de compteurs électroniques, la réflectivité (ou "niveau de gris") se déduit de l'amplitude ou de la largeur du pic en cas de saturation du détecteur, obtenues en temps réel par un traitement électronique conventionnel. Des mémoires électroniques (Eprom par exemple) mémorisent la correspondance entre les grandeurs du signal de sortie de la barrette CCD une fois numérisées (position du pic, amplitude et largeur) et les données du point de l'obstacle : distance et réflectivité, ce qui permet de maintenir le temps réel dans le traitement des données. La correspondance entre les données de l'obstacle et les données d'entrées des mémoires se font par étalonnage dans une situation réelle afin de réduire les effets des tolérances mécaniques de montage du système.

Le flux reçu sur le récepteur dans le cas d'une tâche sur un obstacle à grande distance est plus faible. La focalisation ne peut-être optimale à la fois aux courtes et longues distances. Afin d'optimiser l'amplitude du pic aux grandes distances, il est nécessaire de focaliser la tâche A' sur le minimum de cellules. Pour cela la position de la barrette CCD par rapport à la lentille est réglée de façon à ce qu'à la portée maximale, la lumière de la tâche A' soit au mieux focalisée sur l'une de ses extrémités. La barrette est alors légèrement inclinée à partir de cette extrémité afin de réduire au mieux la défocalisation aux grandes distances. Deux miroirs perpendiculaires entre eux, l'un placé près de la diode laser, incliné à 45° par rapport à son faisceau, l'autre près de la lentille de réception, incliné à 45° par rapport au faisceau diffusé et éventuellement un troisième près de la barrette CCD assure la compacité du système en le faisant tenir dans un cylindre. Le faisceau laser sort alors perpendiculairement à l'axe du cylindre, l'axe de la diode laser est parallèle à celui de la lentille.

Plus la base d'un système de mesure à triangulation est grande, meilleure est la précision. Les deux miroirs, l'un placé près de la diode laser, l'autre près du récepteur, ayant pour rôle de compacter le système, sont donc aussi éloignés que possible dans les limites permises par le support (casquette ou poignet) afin de profiter de la mobilité naturelle de ces parties du corps.

Afin de dégager non plus un point de mesure mais une ligne de coupe, le profilomètre est déplacé soit manuellement par mouvement de son support (poignet ou tête), soit automatiquement. Dans ce dernier cas l'axe du cylindre dans lequel le profilomètre est compacté est l'axe de rotation. Celle-ci est gérée par un moteur pas à pas effectuant des aller-retours. Le balayage du faisceau est donc situé dans une portion de plan perpendiculaire à l'axe du cylindre d'ouverture angulaire $\pm\theta_{max}$, $\theta_{max}$ étant la demi amplitude du mouvement de rotation du cylindre.

Concernant la résolution angulaire, la mesure des paramètres de la portion d'obstacle : distance, réflectivité est moyennée angulairement sur l'angle de rotation effectué durant le temps de pose $\tau$ (dit aussi d'intégration) de la barrette CCD. Une fois le signal de la barrette vidé (durée courte devant le temps d'intégration) le traitement numérique du signal s'effectue et le résultat est transmis à l'interface tactile durant le temps d'intégration du détecteur pour la mesure suivante.

Le respect des normes de sécurité sur les appareils à émission laser de classe I ou II impose des compromis entre la portée, la résolution angulaire, le temps d'acquisition de la mesure...

Afin de maximiser la portée du système, tout en respectant les normes de sécurité, un système additionnel du type capteurs à infrarouge utilisé dans les alarmes permet de détecter la présence d'un individu dans la trajectoire du faisceau laser et de réduire la puissance d'émission afin qu'en cas de rencontre accidentelle du faisceau avec un oeil, la dose de rayonnement reçue soit en deçà des normes de sécurité. La puissance autorisée est calculée fonction des normes de sécurité. La valeur de la puissance émise est transmise à la mémoire électronique qui en tient compte pour le calcul de la réflectivité. Le capteur à infrarouge peut-être remplacé par un système à triangulation optique du type de ceux équipant les appareils photographiques autofocus, la puissance est alors réduite en fonction de l'objet le plus proche. La puissance peut-être également réduite par le profilomètre lui-même fonction de la dernière mesure faite dans la mesure où la pupille de l'oeil ne sera pas le premier élément de la personne rencontré par le faisceau balayé. Dans ce dernier cas le système additionnel (qui peut aussi être un simple capteur à rétroréflexion) ordonne la coupure de l'émission laser lorsqu'un objet se trouve en deçà de la portée minimale du profilomètre et avertit l'interface tactile ou sonore.

La méthode peut-être adaptée à d'autres types de capteurs linéaires (capteurs à résistance de surface de photodiode connus sous le nom de PSD par exemple) et à d'autres types d'émetteurs (la diode laser peut-être remplacée par exemple par une source super radiante si est disponible une source de ce type ayant une divergence suffisamment faible et une intensité énergétique suffisamment grande). Il est également possible en cas de balayage automatique de réduire l'importance des parties tournantes en utilisant un récepteur bidimensionnel (matrice CCD, détecteur PSD bidimensionel). La partie réception est alors fixe, seul tourne le miroir de déflexion du faisceau laser.

Décrivons une variante à base de capteurs PSD. La technique de profilométrie reprend l'ensemble des caractéristiques précédemment décrites aux modifications suivantes près : la source de lumière est une diode laser pulsée au lieu d'une source laser continue et le détecteur un récepteur PSD linéaire au lieu de la barrette CCD. Les impulsions de lumière laser sont d'une durée compatible avec le temps de réponse du récepteur. La résolution spatiale du récepteur PSD plus élevée que celle de la barrette CCD permet une meilleure précision aux grandes distances. L'utilisation de lumière pulsée permet d'accéder aux grandes portées (plusieurs dizaines de mètres) tout en respectant les normes de sécurité sur les lasers de classe I. L'électronique est alors adaptée au signal de sortie du récepteur PSD constitué de deux signaux en courant, les informations sur la distance et la réflectivité étant des fonctions de ces deux courants.

La portée du profilomètre à triangulation est typiquement de quelques dizaines de mètres. Afin de résoudre le problème de la détection de véhicules rapides pour la traversée de voies sans feux, on peut y adjoindre un second profilomètre à temps de vol à portée de quelques centaines de mètres. L'intervalle de temps entre l'émission de l'impulsion lumineuse courte de l'ordre de la nanoseconde et son retour après rétrodiffusion sur l'obstacle donne la distance. La méthode est inadéquate pour les courtes distances inférieures à quelques dizaines de mètres.

L'utilisation d'un système de portée supérieure à quelques dizaines de mètres mène à des problèmes de stabilité et de repérage du pointage, cruciaux lorsqu'il s'agit par exemple de pointer à un mètre au dessus de la chaussée dans son axe pour détecter les voitures. Il faut alors solidariser le système à courte portée de celui à longue portée, les directions de balayage entre les deux systèmes faisant un angle fixe. Ils fonctionnent simultanément, le non-voyant stabilise alors son pointage en fixant, par le biais du profilomètre à triangulation, la route à une distance donnée, la bonne orientation du profilomètre à temps de vol est alors garantie. Les données distance et vitesse du véhicule sont transmises à l'interface tactile et sonore par un code propre.

La résolution spatiale des profilomètres permet de diviser l'intervalle de distance accessible en de l'ordre d'un ou deux milliers de fractions, voir plus, l'échelle de niveau de gris en de l'ordre de la dizaine de fractions. Deux voies sont présentées afin de transmettre ces informations au cerveau, l'une tactile, l'autre sonore. Pour la voie tactile il faut tenir compte de la résolution spatiale limitée de la peau. Il est nécessaire d'utiliser l'activation simultanée de plusieurs cellules tactiles pour représenter une distance. A titre d'exemple, une première rangée ( ou sous ensemble) de n électrodes (8 par exemple) divise la plage de mesure en n intervaux, les intervaux correspondant aux grandes distances (résolution spatiale plus faible) étant plus larges que ceux correspondant aux courtes distances. Une seconde rangée (ou second sous ensemble) de cellules disposée parallèlement à la première sous divise chaque intervalle de la première rangée, une troisième rangée divise les intervaux de la seconde etc. La dernière rangée étant l'échelle fine. Le nombre d'échelles dépend de la résolution souhaitée et du nombre de cellules disponibles. Le codage des distances au niveau des électrodes activées est destiné à bien traduire tactilement les variations de distances (profils) au détriment parfois de la précision sur la connaissance de la distance moyenne de l'obstacle.

Lorsque le balayage du faisceau est automatique, une rangée d'électrodes supplémentaire indique la direction du faisceau laser relativement au profilomètre au cours du balayage. Une rangée d'électrodes indépendantes se charge de traduire la réflectivité de l'obstacle.

Dans le cas d'une interface électrotactile, les électrodes sont constituées de rectangles de quelques millimètres carrés de surface. Une ou plusieurs contre électrodes reliées entre elles ayant plusieurs centimètres carrés de surface font office de masse. La localisation spatiale des sensations est renforcée par les procédés suivants : dans une même rangée il y a augmentation de l'intensité du signal électrique du début à la fin de la rangée. Ainsi l'identification de l'électrode activée se fait à la fois sur la localisation et l'intensité du signal. Le signal électrique envoyé dans chaque rangée d'électrodes peut-être de nature différente : impulsions biphasées de courants de fréquences différentes, de tension, de puissance... afin de créer des sensations tactiles de nature différente aidant à éviter la confusion entre les rangées. On joue également sur l'interface électrode peau, les dimensions des électrodes afin d'étendre la panoplie des sensations.

L'interface électrotactile peut également être constituée d'électrodes sous cutanées, ou d'électrodes implantées dans le cortex visuel.

La seconde voie de transmission de l'information est sonore. On utilise un synthétiseur de sons instrumentaux utilisant la gamme chromatique par exemple. La distance est traduite par exemple par un duo d'instruments, l'un découpant l'intervalle de distance accessible en une échelle grossière, l'autre chaque intervalle de l'échelle grossière en une sous-échelle fine. Les deux instruments jouent simultanément. Lorsque le balayage est automatisé, l'angle de balayage est traduit par un son d'instrument de préférence rytmique ou par une nuance sur un son d'instrument traduisant la distance. La réflectivité est traduite par un timbre instrumental propre ou par l'intensité sonore de l'un des autres instruments. Les synthétiseurs de sons d'instruments sont reliés à un petit haut parleur placé près de l'oreille, ou à une paire d'auriculaires.

L'interface de transmission des données peut être mixte sonore et tactile.

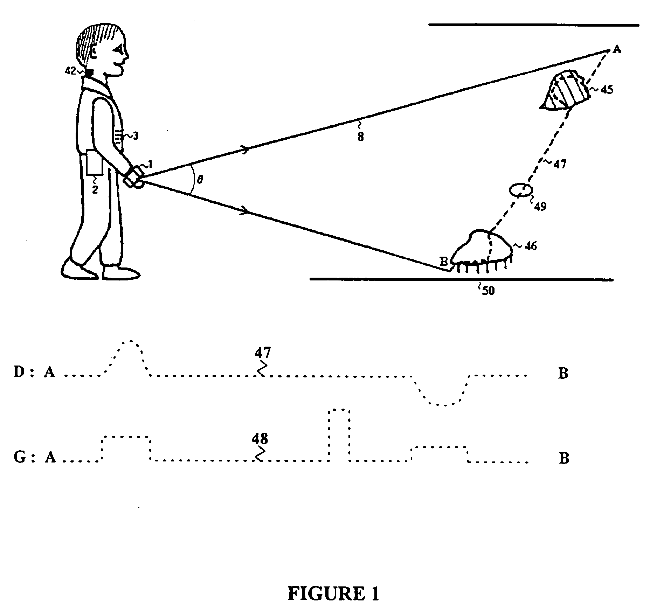

La figure 1 représente de manière schématique un non-voyant portant l'ensemble du système constituée du profilomètre (1), de l'électronique de gestion du système (2) et de l'interface tactile (3) ou sonore (42). Il marche sur une route goudronnée bleu foncée (50) comportant un tas de sable gris clair (45) et un trou au fond sableux clair (46), entre le tas de sable et le trou se trouve une tâche de peinture blanche (49). Le faisceau laser (8) est balayé de θ et dégage les lignes de coupe en distance (47) et réflectivité (48).

La figure 2 est un schéma plus détaillé de l'ensemble profilomètre (1), électronique de gestion (2) et interface électrotactille (3).

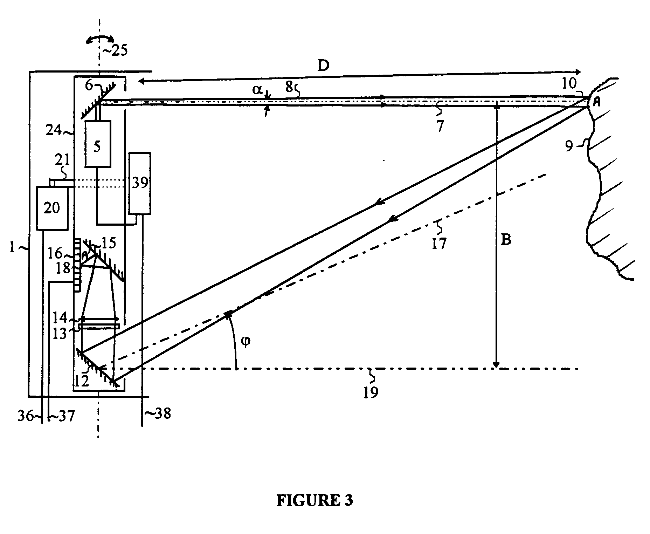

La figure 3 est un schéma de principe du profilomètre (1) à triangulation à émission continue.

La figure 4 est un schéma bloc de l'électronique de gestion (2) du profilomètre (1) dans la version à triangulation à émission continue.

La figure 5 est le schéma de principe de l'interface sonore (42).

Les figures 6 à 10 représentent le signal de sortie de la barrette CCD (16) dans le cas du profilomètre à triangulation à émission continue pour respectivement un obstacle blanc à 15 mètres, un obstacle noir à 15 mètres, un obstacle blanc à un mètre, un obstacle noir à un mètre, un obstacle gris à 5 mètres en présence d'une forte lumière diurne.

La figure 11 représente l'association du profilomètre à triangulation (1) avec le profilomètre à temps de vol (41).

Un mode de réalisation préféré du profilomètre à triangulation à émission continue réalisant l'acquisition des données distances et réflectivités de la ligne de coupe est le suivant. Le profilomètre (1) est constitué d'un émetteur de lumière (4) contenant une diode laser collimatée (5) et un miroir (6) à 45° de l'axe de la diode. La diode laser (5) émet à 820 nm un faisceau laser (8) d'une puissance minimale de 3mW après collimation. La divergence du faisceau de sortie $\alpha$ est de 0.3mrad, son axe (7) est normal à celui de la diode laser (5). L'intersection du faisceau laser (8) avec l'obstacle (9) produit une tâche lumineuse (10) (notée aussi A). Une partie de la lumière rétrodiffusée par la tache de lumière (10) est recueillie par le récepteur de lumière (11) constitué d'un miroir (12), d'un filtre interférentiel (13), d'une lentille (14), d'un miroir (15) et d'une barrette CCD (16). Le miroir sur support (12), de diamètre de l'ordre du centimètre, est placé près de la lentille (14), la normale (17) au miroir (12) fait un angle $\varphi$ proche de 45° avec l'axe (49) parallèle à l'axe (7) passant par le centre du miroir (12). Il (12) renvoie une partie de la lumière rétrodiffusée par (10) sur la lentille (14) précédée d'un filtre interférentiel (13). Le miroir (15) à 45° de l'axe de la lentille (13) permet de disposer la barrette CCD parallèlement à l'axe de la diode laser ce qui facilite l'intégration de l'ensemble émetteur plus récepteur dans un cylindre de faible diamètre compte tenu du boitier de la barrette CCD plus large que la zone sensible. La lentille est ouverte par exemple à f/8, f valant par exemple 35 mm (une lentille ménisque du type de celles des appareils photographiques jetables peut convenir) qui fait l'image (18) (notée aussi A') de (10) sur la barrette CCD (16) (contenant par exemple 1728 cellules de 10 micromètres de largeur). La distance B entre les deux axes (7) et (19) est fixée à la valeur maximale permise par le support d'insertion du profilomètre (1) qui est de l'ordre de 10 à 15 cm. La position de l'image (18) sur la barrette (16) est reliée par triangulation à la distance D entre la zone éclairée de l'obstacle (10) et le centre du miroir (6) du profilomètre par la formule :

$$D = Bf / x'$$

x' étant l'absisse de l'image (18) sur la barrette, l'origine étant prise au point image d'un obstacle à l'infini.

La distance du miroir (12) à la lentille (14) doit être la plus faible possible pour des questions de champ. La distance de la lentille (14) à la barrette (16) doit être légèrement supérieure à la distance focale f de la lentille, réglée de manière précise de façon à ce que la tâche (10) située à la distance maximale accessible soit au mieux focalisée sur la barrette (16) à son extrémité la plus éloignée de la lentille. Le plan de la barrette est très légèrement incliné par rapport à celui de la lentille afin de réduire la défocalisation au mieux sur les zones correspondant aux distances D élevées.

L'inclinaison $\varphi$ fixe du miroir (12) est choisie de manière à ce que entre la portée maximale et minimale, l'inclinaison des rayons soit la plus faible possible, soit pour $\varphi$ valant 30° on obtient une inclinaison d'environ $\pm 15°$ pour une barrette (16) de 1728 cellules de 10$\mu$m de large. Un autre compromis sur la valeur de $\varphi$ peut consister à réduire l'inclinaison au niveau des rayons provenant des tâches (10) les plus éloignées afin d'optimiser les conditions de Gauss et donc la focalisation dans cette zone, la valeur de $\varphi$ est alors proche de 45°.

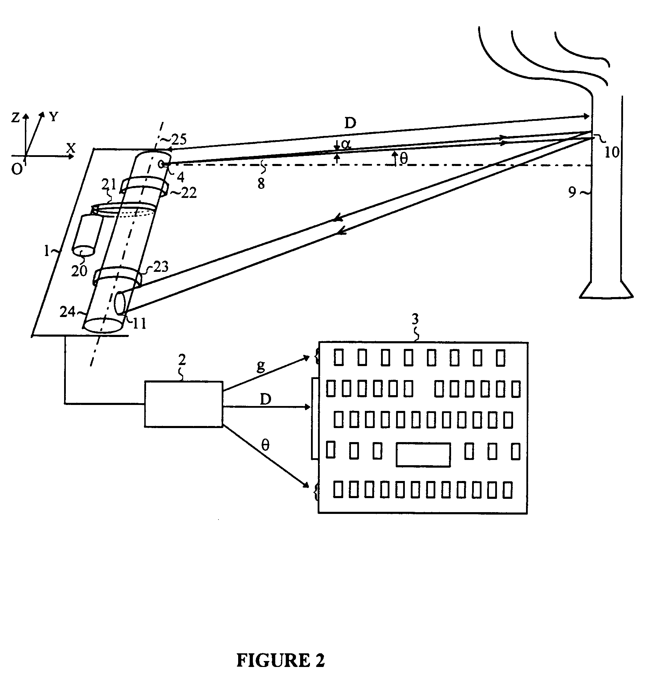

L'ensemble des composants (5),(6),(12),(13),(14),(15),(16) est contenu dans un cylindre (24) d'axe (25). Le moteur pas à pas (20) assure la rotation du cylindre (24) autour de son axe (25) par l'intermédiaire d'une liaison mécanique (21) constituée par exemple de rouages et courroies, le cylindre étant supporté par deux bagues de roulement (22) et (23) (figure 2). Les mesures de distance et réflectivité sont ainsi répétées dans le plan XZ dans le champ angulaire $\pm\theta_{max}$, permettant de dégager les profils des obstacles.

Dans ce qui suit, le terme "circuit" désigne un moyen assurant une fonction par l'intermédiaire de circuits électroniques et/ou d'un logiciel en association avec un microprocesseur.

L'électronique de gestion (2) de l'ensemble du système, insérable dans une sacoche de ceinture, est constituée des circuits (26) à (35) et (40).

Le circuit (26) comprend les sources d'énergies (piles rechargeables) nécessaires au fonctionnement de l'ensemble du système.

Le circuit (27) est la carte de commande du moteur pas à pas. La liaison (36) permet de gérer la rotation du moteur. Celle-ci se fait de manière continue par aller retour permettant au cylindre d'effectuer une rotation de $\theta$ de $\pm$ 30°. Une sortie du circuit (27) fournit la valeur numérisée de l'angle de rotation $\theta$.

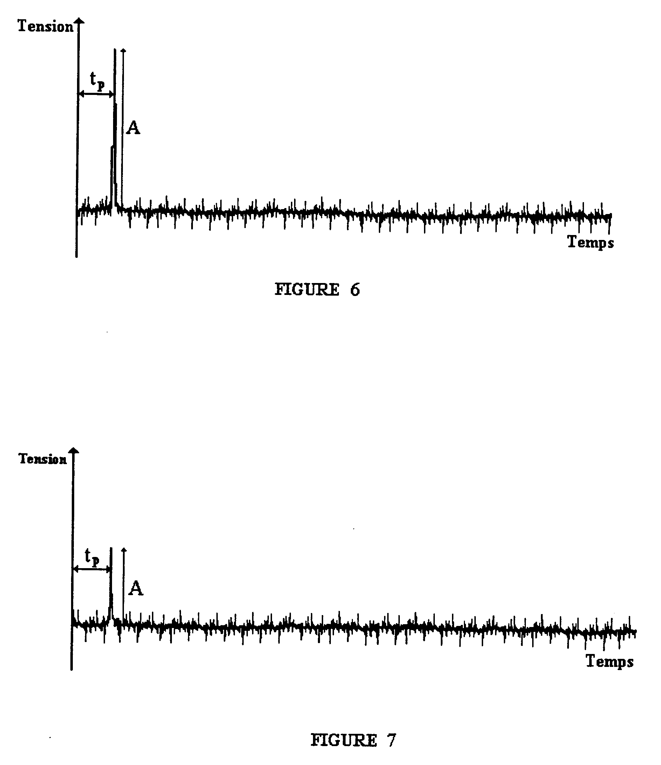

Le circuit (28) est la carte de commande de la barrette CCD (16), les informations sont transmises par la liaison (37). Le signal de sortie de la barrette CCD (figures 6 à 10) est transmis au circuit (29).

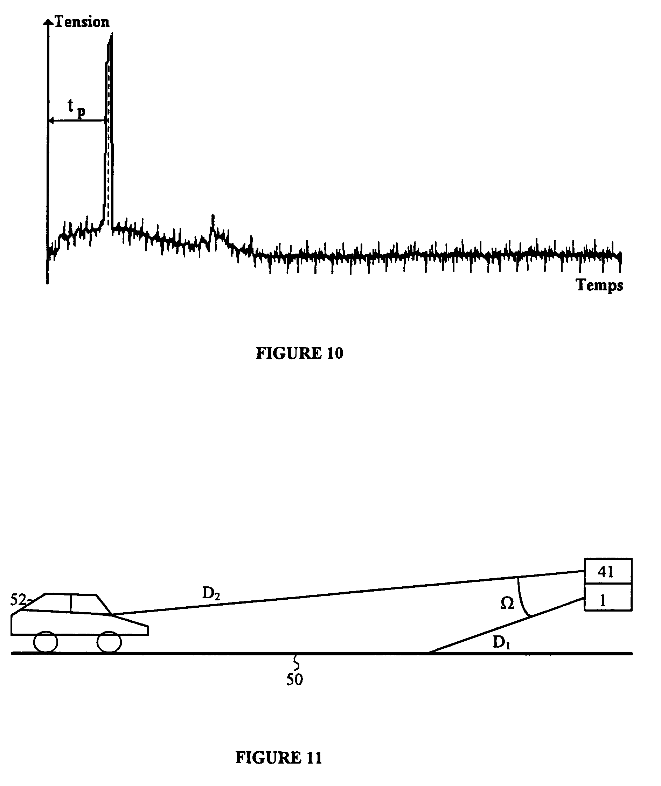

Dans certaines conditions de fonctionnement comme en extérieur par une journée ensoleillée, il est nécessaire de se prémunir de la lumière parasite du jour. Le filtre interférentiel (13) à sa fréquence centrale à 820 nm, une bande passante de 40 nm et une transmission de 80% à l'intérieur de cette dernière. Il est placé devant la lentille (14) et permet d'éliminer l'essentiel de la lumière du jour. La lumière parasite résiduelle par une journée de plein soleil produit une perturbation du signal du type de celle représentée à la figure 10. Le signal dû à la lumière du jour se distingue du signal utile par une dérivée plus faible et une extension temporelle plus grande (figure 10). Le circuit (29) par un dispositif de filtrage et seuil classique sur le signal et sa dérivée, associé à un circuit de décision logique, permet de s'affranchir des effets de la lumière parasite et fournit aux circuits (30) et (31) un signal d'aspect équivalent à celui des figures 6 à 9.

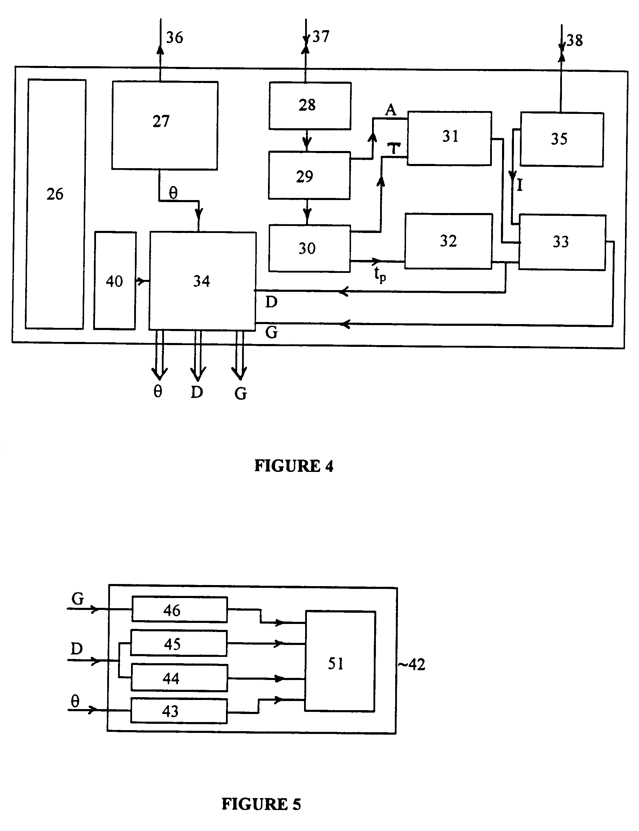

La position temporelle $t_p$ du centre du pic du signal de sortie de la barrette CCD (figure 6 à 9), correspondant à la position de l'image (18) sur la barrette (16) dépend uniquement, pour une configuration donnée, de la distance D de l'obstacle. Ce signal est disponible à la sortie du circuit (29) de la figure 4. L'intervalle de temps $t_p$ entre le début du signal de sortie (correspondant à la lecture de la première cellule de la barrette) et le centre du pic est converti par le circuit (30) en un signal numérique. Le circuit (30) est constitué par exemple de deux compteurs l'un démarrant sur le début du signal et s'inhibant sur le premier front du pic du signal, l'autre démarrant sur le premier front et s'inhibant sur le second front, la somme du premier signal et de la moitié du second est ensuite réalisée, ce qui revient à une inhibition sur le centre du pic. Cette valeur est transmise au circuit (32) mémoire programmable (Eprom par exemple). Elle fait correspondre à chaque valeur numérique $t_p$ la donnée numérique de sortie correspondant à la distance D de l'obstacle. La mémoire est avantageusement chargée à partir d'un relevé expérimental. La valeur numérique sortant de (32) est en fait l'adresse du démultiplexeur (34) gérant l'activation des électrodes de l'interface tactile (3). La variation de θ est continue, la mesure de la distance est donc moyennée sur l'angle Δθ correspondant à la rotation effectuée sur le temps de pose τ de la barrette CCD.

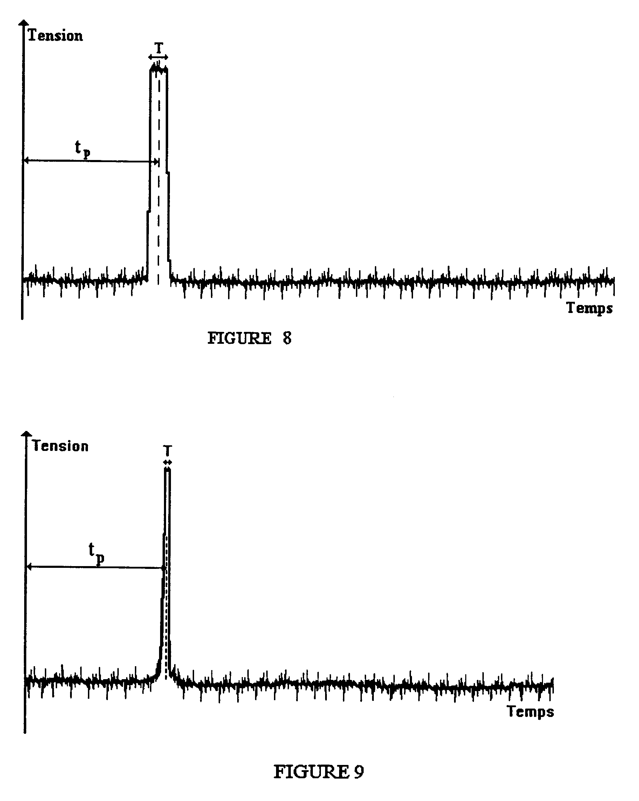

L'amplitude du pic (figure 6 et 7) du signal de sortie de la barrette CCD (disponible à la sortie du circuit (29)) ou sa largeur temporelle (figure 8 et 9) quand il y a saturation de la zone image (18) sur la barrette, permet d'avoir l'information sur la réflectivité à la longueur d'onde d'émission de la diode laser (5). Cette valeur, correspondant suivant les cas à une mesure de tension (valeur maximale du pic) ou à celle d'un intervalle de temps (mesure de la largeur du pic), est numérisée. Cette fonction est remplie par le circuit (31). L'amplitude du pic de la figure 6 correspond à un obstacle blanc à 15 mètres, l'amplitude de celui de la figure 7 à un obstacle noir à la même distance. La largeur temporelle du pic T de la figure 8 correspond à un obstacle blanc à un mètre, celle du pic de la figure 9 à un obstacle noir à la même distance. Le circuit (31) mesure l'amplitude A du pic du signal de sortie de la barrette CCD. Si cette amplitude A correspond à la saturation (figures 8 et 9) la donnée retenue est alors la sortie du deuxième compteur du circuit (30) correspondant à la largeur temporelle T (figure 8 et 9) du pic. La largeur temporelle ou l'amplitude du pic est convertie toujours par le circuit (31) en une grandeur numérique constituant une partie de l'entrée du circuit (33) essentiellement constitué d'une mémoire électronique (Eprom par exemple). Pour un signal de sortie de la barrette CCD caractérisé par (A,T) la réflectivité de l'obstacle dépend de sa distance D et de la puissance d'émission de la diode laser. L'entrée de la mémoire (33) contient deux autres parties constituées de D sortie du circuit (32) et de la valeur numérisée I de l'intensité de la diode laser. La correspondance entre ces données d'entrée et le niveau de gris de l'obstacle (réflectivité à 0.8μm ici) est unilatérale, un relevé expérimental permet le chargement de la mémoire (33). La donnée G transmise au démultiplexeur (34) gère alors la rangée correspondante d'électrodes de l'interface tactile ou l'instrument de l'interface sonore. Cet exemple de réalisation permet une profilométrie non ambiguë des obstacles du blanc au noir dans la gamme 30 cm, 30m pour une puissance de la diode laser après collimation de 3 mW à 8,5 mW. En effectuant un balayage de θ de ±30° en une seconde avec un temps de pose de 12 ms pour la barrette CCD (16), le nombre de mesures de distances prises est de l'ordre de soixante dix et la résolution angulaire est de l'ordre du degré. La résolution spatiale décroit avec la distance du mm (pour 30 cm) à l'ordre du mètre (pour 30 m).

Au niveau sécurité, un observateur situé dans le champ du profilomètre risque de recevoir le faisceau dans l'oeil. Cet événement, vu la dimension de la pupille est très peu probable, il doit néanmoins présenter une exposition lumineuse conforme aux normes de sécurité. Pour une puissance de 3mW à 820 nm, une divergence de 0.3mrad, un balayage de ±30° du faisceau en 1 seconde, on arrive dans le cas le plus défavorable d'une pupille dilatée (diamètre 7 mm) située à 30 cm du profilomètre à une exposition de 0.165 J/m$^2$. La norme française NF C 43-801 conforme aux recommandations de l'ACGIH ("American Conference of Governmental Industrial Hygienists") et à la C.E.I. (Commission Electrotechnique Internationale) autorise 0.169J/m$^2$. 30 cm est la distance minimale de vision du système dans la configuration décrite. Le faisceau laser doit être coupé si un obstacle (éventuellement une tête de personne) se trouve à moins de 30 cm (cela est sans incidence sur le fonctionnement car le système n'est de toute façon plus opérationnel à ce stade de proximité). Pour cela un système (39) du type capteur à infrarouge pyrométrique type alarmes couplé, à un circuit électronique (35), mesure la proximité de la personne la plus proche par seuils et gère la puissance émise par la diode laser. Si une personne est à moins de 30 cm, l'alimentation de la diode laser est coupée. L'interface tactile fournit alors un code tactile spécial prévenant de l'opération. En l'absence d'obstacles à 30 cm, la puissance autorisée est de 3mW. Cette puissance de 3mW permet une détection facile jusqu'à 14 mètres. En l'absence d'obstacles à 8 mètres les normes de sécurité permettent 6mW d'émission en cas de rencontre accidentelle du faisceau balayé de 60° en une seconde avec l'oeil, ce qui permet de fonctionner jusqu'à environ 20 mètres. En l'absence d'obstacles à 10 mètres, la puissance de 8,5 mW peut-être émise ce qui permet d'atteindre 30 mètres. Le capteur (39) a donc ici quatre seuils de distance, moins de 30 cm, entre 30 cm et 8 mètres, entre 8 mètres et 20 mètres, plus de 20 mètres, il autorise une puissance de 3 à 8,5 mW suivant ces seuils. La liaison (38) relie le capteur (39) à son électronique (35) et à la diode laser (5). La donnée I fournit la puissance autorisée de la diode laser au circuit (33) afin qu'il en tienne compte dans le calcul de la réflectivité. Le capteur pyrométrique à infrarouge peut-être remplacé par un proximètre à triangulation simple du type de ceux utilisés dans certaines caméras autofocus, l'ajustement de puissance se fait alors en fonction de l'obstacle le plus proche indépendamment du fait que ce soit une personne ou non. Cet ajustement peut-être également réalisé par le profilomètre lui même qui réduit sa puissance dès qu'une mesure indique un point obstacle proche.

Lorsque le balayage n'est pas automatisé on remplace le diode laser à 820nm par une diode laser visible à 670 nm par exemple de puissance limitée à 1 mW, afin d'être dans les normes de la classe II pour la sécirité oculaire (norme IEC 825). Le cylindre (24) est alors fixe. Le balayage se fait uniquement par celui du support du profilomètre, la rangée d'électrodes correspondant à l'angle θ est supprimée.

Un profilomètre (41) à temps de vol est placé en option sur le profilomètre de base (1) (figure 11). Son axe fait un angle $\Omega$ fixe avec l'axe de (1), de façon qu'en pointant le sol à une distance $D_1$ (en se repérant sur l'interface), le faisceau laser sortant de (41) soit quasiparallèle à la route à environ un mètre de hauteur, apte à intercepter une voiture (52) située à la distance $D_2$. Le profilomètre (41) est construit suivant des techniques préalablement connues essentiellement développées dans les jumelles télémétriques à usage civil, dans un compromis limitant la portée à 300 mètres, le temps d'acquisition étant réduit au $1/10^{ème}$ de seconde par exemple et la résolution spatiale étant de l'ordre du mètre. La mesure de la vitesse se fait par mesure de distances répètées. Le système a son interface électronique propre et se sert éventuellement des cellules tactiles et sonores dédiées à (G) et (θ) du profilomètre de base pour traduire la distance (D) et la vitesse (V) du véhicule, ou bien possède son interface propre.

Le circuit (40) génère les signaux électriques, essentiellement constitués de trains d'impulsions biphasés de courant, puissance ou tension destinés aux électrodes. La matrice d'électrodes (3) représentée à la figure (2) est ventrale. La rangée supérieure est constituée de 8 électrodes et traduit le niveau de gris (ou réflectivité), l'électrode de gauche correspond au noir et celle de droite correspond au blanc. La rangée inférieure traduit l'angle θ de balayage automatique, les douze électrodes correspondent chacune à un intervalle de 5 degrés pour un balayage de 60°. Les trois rangées centrales traduisent la distance. La plus basse de ces rangées contient 6 électrodes plus la contre-électrode de grande surface au centre. Ces 6 électrodes divisent l'intervalle accessible de distance en six. La rangée au dessus est une première échelle fine de 12 électrodes, la partie gauche de la rangée la plus haute est une troisième échelle fine de 6 électrodes et la partie droite la quatrième échelle ultime de 6 électrodes. Le potentiel de subdivision en distance est de 6x12x6x6 = 2592 points, soit environ deux fois la suodivision en distance réalisable par le profilomètre, ce qui permet de ne pas utiliser les combinaisons d'électrodes pouvant porter à confusion. La transmission d'une valeur de distance se fait dans cet exemple par l'activation simultanée au maximum de quatre électrodes.

L'interface sonore (42) est constituée des quatre synthétiseurs de sons instrumentaux (43), (44), (45), (46) représentés schématiquement à la figure 5 et du mixeur et haut parleur (51) constituant la partie sonore. Le synthétiseur (44) peut générer un son type bourdon de 8 pieds (jeux d'orgue) sur 5 octaves (soit 60 cellules sonores) constituant l'échelle grossière. Le synthétiseur (45) peut alors générer un son type flûte sur 2 octaves (soit 24 cellules sonores). Ces deux types de sons se distinguent bien et sont très peu agressifs à l'écoute. Ceci donne sur 2 voies les 1440 subdivisions nécessaires. Le synthétiseur (46) traduit l'échelle des gris (ou réflectivité) sur 8 notes par un son de timbre violon par exemple. Un quatrième son généré par le synthétiseur (43) type basse par exemple sur une douzaine de notes traduit le balayage lorsque celui-ci est automatisé. Les synthétiseurs (43) et (46) peuvent être supprimés et remplacés par des nuances sur l'un des autres sons instrumentaux.

Le système est destiné à la fabrication d'un appareil portable et compact améliorant l'autonomie des non-voyants.

## Revendications

1. Dispositif autonome de perception de l'espace essentiellement pour non-voyants, fondé sur la mesure optique des distances et la transmission de cette information au cerveau, caractérisé en ce qu'il associe :

   - un ou deux profilomètres optiques actifs (1), (41) à sécurité oculaire, dont le profilomètre principal (1) est constitué d'un système optique de mesure de distance (télémètre) basé sur le principe de la triangulation de partie émettrice comprenant un faisceau laser collimaté assurant une haute résolution angulaire pouvant atteindre la divergence du faisceau laser, de partie réceptrice comprenant une lentille formant l'image du point lumineux produit par le faisceau laser touchant un obstacle sur un récepteur de lumière de dimensions très supérieures à celle de l'image formée, le récepteur localisant sur sa surface la position de l'image ce qui donne la distance au point lumineux, l'intensité de l'image donnant la réflectivité du point de l'obstacle, la grande dimension du récepteur par rapport à l'image permettant une mesure de distance sur une grande profondeur de champ, et des moyens (manuels ou automatiques) d'assurer le mouvement du faisceau laser afin d'effectuer un balayage continu de mesures de distances et réflectivités dégageant des lignes de coupe en distance (47) et réflectivité (48) d'orientation variable, une ligne de coupe étant l'intersection de la surface balayée par un faisceau lumineux collimaté avec la face accessible au faisceau des obstacles, les informations sur le déplacement ou la vitesse s'obtenant par comparaison de deux lignes de coupe en distance de même orientation ;

- un système électronique de gestion du profilomètre et de traitement des données en temps réel (2) transmettant les données en distance et réflectivité point par point de la ligne de coupe à l'interface tactile (3) ou sonore (42) ;
- une interface tactile (3) ou sonore (42) transmettant, au rythme du balayage du faisceau, sur une partie du corps, les données distance et réflectivité de chaque point des lignes de coupe (47) et (48) sous la forme d'un code tactile ou sonore cérébralement interprétable utilisant des cellules tactiles ou sonores.

2. Dispositif selon la revendication 1 caractérisé en ce que les profilomètres (1), (41) sont insérés dans un support de poignet ou de casquette, que le balayage se fait soit seulement par mouvement du support, soit par association d'un balayage automatique et du mouvement du support, que le système électronique (2) de gestion des données est insérable par exemple dans une sacoche de ceinture, que l'interface tactile (3) est une matrice de cellules vibro ou électrotactiles placée sur une partie du corps (ventre, estomac, cuisse...) ou sous cutanée éventuellement placée dans le cortex visuel, ou que l'interface sonore est constituée d'un haut parleur ou paire d'écouteurs.

3. Dispositif selon les revendications 1 ou 2 caractérisé en ce que le profilomètre actif principal (1) à triangulation est constitué d'un faisceau laser (8) issu d'une diode laser (5) collimatée à émission continue ; que la partie réceptrice (11) est constituée d'un détecteur linéaire de lumière (barrette CCD) (16), associé à une lentille (14), recueillant la lumière rétrodiffusée par l'obstacle et la focalisant en une tache image (18) sur le détecteur (16), l'axe du faisceau laser étant séparé d'une distance D, dite base, de l'axe de réception ; que l'information sur la distance est donnée par la position de la tache image (18) sur le détecteur (16) et celle sur la réflectivité par l'amplitude ou la largeur de la tâche (18) ; que les mesures sont moyennées angulairement sur l'angle de rotation effectué durant le temps de pose (ou d'intégration) du récepteur, que la lentille (14) est précédée d'un filtre interférentiel (13), centré à la longueur d'onde de la diode laser émettrice et de bande passante suffisamment large pour laisser passer sensiblement de la même façon les rayons d'inclinaisons variables lui parvenant et ceci afin de réduire le bruit dû à la lumière diurne ; que deux miroirs de renvoi (6) et (12) inclinés sensiblement à 45° du faisceau laser (8) assurent la compacité du système en le faisant tenir dans un cylindre (24) dont la rotation autour de son axe (25) gérée par un moteur pas à pas (20) assure un degré d'automatisation du balayage du faisceau, la distance entre les deux miroirs (6) et (12) étant la maximale permise compte tenu de l'insertion du système dans un support compact, un troisième miroir (15) assurant la compacité du cylindre (24).

4. Dispositif selon la revendication 3 caractérisé en ce que la mesure de la distance et de la réflectivité à une longueur d'onde donnée se fait en temps réel par une série de circuits électroniques ayant en mémoire par étalonnage la correspondance entre les données extraites de la barrette CCD (16) (position du pic, amplitude ou largeur) et la distance et réflectivité de la portion d'obstacle éclairée par le faisceau laser.

5. Dispositif selon les revendications 3 ou 4 caractérisé en ce que la puissance d'émission de la diode laser est régie par un système à triangulation optique, du type de ceux équipant les dispositifs "autofocus", inséré dans le profilomètre, ou par un capteur à infrarouge, ou par les mesures faites par le profilomètre lui même, permettant de réduire par seuils la puissance de la diode laser en cas d'obstacles proches dans le cas où l'un de ceux-ci serait la tête d'une personne dont les yeux ne doivent pas recevoir en cas de rencontre accidentelle avec le faisceau une exposition supérieure à celle des normes de sécurité en vigueur, le calcul de la réflectivité effectué par le circuit (33) tenant alors compte de la puissance émise.

6. Dispositif selon l'une quelconque des revendications précédentes caractérisé en ce que le second profilomètre optionnel (41) est à temps de vol et solidaire du profilomètre à triangulation (1), les directions de balayage entre les deux systèmes faisant un angle fixe, afin que le profilomètre à triangulation serve au pointage du profilomètre à temps de vol.

7. Dispositif selon l'une quelconque des revendications précédentes caractérisé en ce que l'interface tactile ou sonore est constituée d'un nombre limité de cellules tactiles ou sonores traduisant les données par l'activation simultanée de plusieurs cellules à la fois, la plage de distances accessibles est découpée en une première échelle grossière correspondant à un sous ensemble de cellules, un second sous ensemble découpe la première échelle est une sous échelle et ainsi de suite jusqu'à obtenir une résolution suffisante vu le nombre de cellules disponibles.

8. Dispositif selon les revendications 1,2 ou 7 caractérisé en ce que l'interface tactile est constituée de cellules électrotactiles rectangles de quelques millimètres carrés de surface associées à une ou plusieurs contre électrodes de plusieurs centimètres carrés de surface, la localisation spatiale des électrodes sur la peau est renforce, a l'intérieur d'un même sous ensemble, par différents niveaux d'intensité du signal électrique, la panoplie de sensations de nature différente utilisée pour les différents sous ensembles étant obtenue en faisant varier la surface des électrodes, l'interface peau électrode, la nature du signal électrique (intensité, puissance ; tension...).

9. Dispositif selon les revendications 1,2 ou 7 caractérisé en ce que l'interface sonore (42) code la distance par un duo d'instruments de timbres différents traduisant, l'un l'échelle grossière, l'autre la sous échelle fine, la réflectivité étant codée soit par l'intensité sonore d'un des deux instruments précédents, soit par un autre timbre, de même pour l'angle de balayage éventuel.

**Claims**

1. Autonomous device for the spatial perception, essentially for blind people, based on the optical measure of distances and the transmission of that information to the brain characterized by the association of :

   - one or two optical active profilometers (1), (41) satisfying ocular security, of which the basic profilometer (1) is composed of an optical system for measuring distances (telemeter) founded on the triangulation principle of an emitting part including a collimated laser beam allowing a high angular resolution that can reach the divergence of the laser beam, of a receptive part including a lens imaging the light spot produced by the laser beam intercepting an obstacle, on a light receptor of dimensions far larger than the image one, the receptor localizing on its area the position of the image that gives the distance to the luminous point, the intensity of the image giving the reflectivity of the obstacle point, the large dimension of the receptor relatively to the image allows a measure of distance over a large depth of field, and the means (manual or automatics) to drive the movement of the laser beam in order to do a continuous scanning of measures of distances and reflectivity providing outlines in distance (47) and reflectivity (48) of adjustable orientation, an outline being the intersection of the shape scanned by the collimated beam with the accessible part of the obstacles to the beam, information about displacement or speed being obtained by comparison of two outlines in distance of identical orientation ;
   - an electronic system managing the profilometer and the data treatment in real time (2) transmitting data in distance and reflectivity point by point of the outline to the tactile (3) or sonorous (42) interface ;
   - a tactile (3) or sonorous (42) interface transmitting, synchronously with the scanning of the beam on a body part, data about distance and reflectivity of each point of the outlines (47) and (48) under the form of a tactile or sonorous code intelligible to the brain using tactile or sonorous cells.

2. A device in accordance with claim 1 characterized by the fact that the profilometers (1), (41) are insertable in the support of a wrist or a bill, that the scanning is done only by movement of the support, or by association of an automatic scanning and by the movement of the support, that the electronic system (2) managing the data is insertable for example in a belt bag, that the tactile interface (3) is a matrix of vibro or electrotactiles cells covering a part of the body (abdomen, stomach, thigh...) or sub cutaneous, eventually localized in the visual cortex, or that the sonorous interface is made of a loud-speaker or a pair of auricular.

3. A device in accordance with at least one of claims 1 and 2 characterized by the fact that the basic active profilometer (1) is based on triangulation and made of a laser beam (8) emitted by a continuous laser diode (5), and that the receptive part (11) is made of a linear light sensor (CCD line) (16), associated to a lens (14), collecting the retrodiffused light by the obstacle and focusing it in an imaging spot (18) on the sensor (16), the axis of the laser beam being separated of a distance D, called basis, of the reception axis, that the information about distance is given by the position of the imaging spot (18) on the sensor (16) and that the reflectivity is given by the amplitude or the width of the spot (18), that the measures are averaged on the rotation angle covered during the time exposure (or integration) of the receptor part, that the lens (14) is preceded by an interferential filter (13), having its central wavelength corresponding to the emission of the laser diode and a bandpass large enough to transmit in about the same way the rays of variable inclinations reaching it in order to reduce the noise due to diurnal light, that two mirrors of return (6) and (12) inclined near 45° of the laser beam (8) give compactness to the system making it insertable in a cylinder (24) which rotation around its axis (25) done by a stepper motor (20) give a partial automation of the beam scanning, the distance between the two mirrors (6) and (12) being the maximal permitted in order to take account of the insertion of the system in a compact support, a third mirror (15) giving compactness to the cylinder (24).

4. Device in accordance with claim 3 characterized by the fact that the measure of distance and reflectivity at a given wavelength is made in real time by a set of electronic circuits having memorized by calibration the correspondence between the data extracted from the CCD line (16) (position of the peak, amplitude or width) and the distance or reflectivity of the obstacle part lightened by the laser beam.

5. Device in accordance with at least one of claims 3 and 4 characterized by the fact that the emission power of the laser diode is managed by an optical triangulation system, of a model similar to 〈〈autofocus 〉〉systems, inserted in the profilometer or by an infrared sensor, or by measures done by the profilometer itself, allowing to reduce by steps the power of the laser diode in case of near obstacles in the case one of them would be the head of a person whose eyes do not have to receive in case of accidental meeting with the beam an exposition superior to the actual security standards, the calculus for the reflectivity done by the circuit (33) takes account of the emitted power.

6. Device in accordance with at least one of the previous claims characterized by the fact that the second optional profilometer (41) is of time of flight and fixed to the triangulation one (1), the scanning directions between the two systems making a feed angle, so that the triangulation profilometer helps to point the time of flight profilometer.

7. Device in accordance with at least one of the previous claims characterized by the fact that the tactile or sonorous interface is made of a limited number of tactile or sonorous cells converting the data by simultaneous activation of several cells, the range of accessible distances being divided in a first rough scale corresponding at a subset of cells, a second subset divides the first scale in a subscale and so on until we get resolution enough given the number of available cells.

8. Device in accordance with at least one of claims 1,2 and 8 characterized by the fact that the tactile interface is made of rectangles electrotactiles cells of a few quadrate millimeters area, associated to one or more mass electrodes of several quadrate centimeters area, the spatial localization of electrodes on the skin being intensified, inside a same subset, by different levels of intensity of the electric signal, the panoply of sensations of different kinds used by the different subsets being obtained by the modulation of the area of the electrodes, the interface skin electrode, the nature of the electrical signal (intensity, power, voltage...).

9. Device in accordance with at least one of claims 1,2 and 8 characterized by the fact that the sonorous interface (42) codes the distance by a duo of instruments of different sonorities translating, one the rough scale, the other the fine subscale, the reflectivity being coded either by the sonorous intensity of one of the two previous instruments, or by another sonority, the same for the eventual scan angle.

**Patentansprüche**

1. Autonome Vorrichtung zur Raumperzeption, gedacht hauptsächlich für Blinde, die auf der optischen Messung der Distanzen beruht sowie der Übertragung dieser Information an das Gehirn, und dadurch gekennzeichnet ist, dass sie umfasst :

   - ein oder zwei aktive Profilometer (1) (41), okular gesichert, wobei das Hauptprofilometer (1) aus einem optischen Distanzenmesssystem (Telemeter) besteht, das auf dem Triangulationsprinzip beruht, dessen Sendeteil einen kollimierten Laserstrahl umfasst, der eine hohe Winkelauflösung aufweist, welche die Divergenz des Laserstrahls erreichen kann, sowie ein Empfänger, bestehend aus einer Linse, die den Lichtfleck abbildet, der ensteht wenn der Laserstrahl ein Hindernis trifft, wobei dieses Erfassungssystem viel grösser ist als die Abbildung, derart dass der Lichtempfänger auf der eigenen Oberfläche die Lage des Bildes lokalisiert, woraus sich die Distanz zum Lichtpunkt ergibt, und wobei die Bildstärke das Reflexionsvermögen des Hindernisses ergibt, und wobei die Grösse des Empfängers im Vergleich zum Bild eine Messung der Distanz über einen grossen Tiefenbereich ermöglicht; sowie Vorrichtungen (manuell oder automatisch), die die Bewegung des Laserstrahls gewährleisten, so dass die Distanzen und Reflektivitäten kontinuierlich abgetastet werden können, so dass die Umrisse von Distanz (47) und Reflexionsvermögen (48) entstehen, wobei ein Umriss durch die Überschneidung der durch den parallelen Laserstrahl abgetasteten Fläche und der dem Lichtstrahl zugewandten Seite des Objektes definiert ist, und wobei die Information betreffend Bewegung oder Geschwindigkeit durch den Vergleich von zwei Distanzumrissen gleicher Orientierung erhalten wird ;

- ein elektronisches System, das das Profilometer steuert und die Datenverarbeitung in Realzeit (2) sicherstellt, und das Distanz und Reflexionvermögen Punkt für Punkt von Umriss an das taktile (3) oder akustische (42) Übertragungssystem weiterleitet ;

- ein taktiles (3) oder akustisches (42) Übertragungssystem, das im Rhythmus der Abtastbewegung die Distanz- und Reflektivitätsdaten von jedem Punkt der Umrisse (47) und (48) in Form einer taktilen oder akustischen vom Gehirn entsprechend interpretierbaren Kodierung, mittels taktiler oder akustischer Zellen auf einen Körperteil überträgt.

2. Vorrichtung gemäss Anspruch 1, dadurch gekennzeichnet, dass die Profilometer (1), (41) in ein Handgelenk- oder Schirmmützengestell eingefügt sind, und dass die Abtastbewegung entweder nur durch die Körperbewegung, oder durch ein Zusammenwirken von automatischem Abtasten und der Körperbewegung sichergestellt wird, sowie dass das elektronische Datenverarbeitungssystem (2) zum Beispiel in einer Gurttasche untergebracht werden kann, und das taktile Übertragungsystem (3) eine Matrize von vibro- oder elektrotaktilen Zellen ist, die auf einem Körperteil (Bauch, Magen, Oberschenkel) aufliegt oder unter der Haut, eventuell in der Netzhaut des Auges, eingepflanzt ist, oder dass das akustische Übertragungssystem aus einem Lautsprecher oder aus Kopfhörern besteht.

3. Vorrichtung gemäss den Ansprüchen 1 oder 2 dadurch gekennzeichnet, dass das aktive Triangulationsprofilometer (1) aus einem Laserstrahl (8) besteht, welcher aus der kontinuierlichen Emission eines kollimierten Diodenlasers (5) erzeugt wird, und der Empfänger aus einem linearen Lichtdetektor (CCD Linie) (16) besteht, verbunden mit einer Linse (14), welche das von dem Hindernis rückgestreute Licht aufnimmt, und dieses Licht auf den Detektor (16) als Bildfleck (18) abbildet, wobei die Achse des Laserstrahls um eine Distanz D, genannt Basis, von der Erfassungsachse getrennt ist; dass die Information betreffend die Distanz durch die Lage des Bildfleckes (18) auf dem Detektor (16), und die Information betreffend das Reflexionsvermögen durch die Grösse oder Intensität des Fleckes (18) gegeben sind; dass die Messungen über den Winkel der Drehung gemittelt sind, die während der Exponierung (oder Integrationszeit) des Empfängers ausgeführt wird; dass sich vor der Linse (14) ein Interferenzfilter (13) befindet, welcher auf die Wellenlänge des Diodenlasers eingestellt ist, und der eine genügende Bandbreite besitzt, um die aus verschiedenen Richtungen auftreffenden Strahlen gleichmässig durchzulassen, womit das vom Tageslicht herrührende Rauschen eingeschränkt werden kann; dass zwei Spiegel (6) und (12), die circa 45° relativ zum Laserstrahl (8) geneigt sind, die Kompaktheit des Systems gewährleisten, indem das System in einem zylinderförmigen Behälter (24) untergebracht werden kann, dessen Drehung um seine Achse (25), gesteuert durch einen Schrittmotor (20), die Abstastbewegung selbsttätig durchführt, während die Distanz zwischen den beiden Spiegeln (6) und (12) die grösstmögliche ist, welche mit der Unterbringung des Gerätes in einem kompakten Gehäuse vereinbar ist, wobei ein dritter Spiegel (15) die reduzierte Dimension des Zynlinders (24) ermöglicht.

4. Vorrichtung gemäss Anspruch 3 dadurch gekennzeichnet, dass die Distanz und das Reflexionsvermögen für eine feste Wellenlänge in Realzeit gemessen werden, wobei eine Serie von elektronischen Schaltkreisen durch Eichung das Verhältnis zwischen den aus dem CCD Detektor (16) gewonnenen Daten (Position des Bildfleckes, Amplitude oder Breite), und der Distanz und Reflexionsvermögen des vom Laserstrahl beleuchteten Objektes speichert.

5. Vorrichtung gemäss den Ansprüchen 3 oder 4 dadurch gekennzeichnet, dass die Emissionsleistung des Diodenlasers entweder durch ein im Profilometer eingebautes optisches Triangulationssystem gesteuert wird, analog den in „autofocus" Vorrichtungen verwendeten, oder durch einem Infrarot Sensor, oder direkt durch die vom Profilometer selbst ausgeführten Messungen, wobei die Leistung des Diodenlasers schrittweise reduziert wird im Falle von sich in der Nähe befindenden Objekten, zum Beispiel dürfen die Augen einer sich in der Nähe befindlichen Person bei einem zufälligen Auftreffen des Laserstrahls keiner höheren Intensität ausgesetzt werden als dies die geltenden Sicherheitsnormen zulassen, wobei die Berechnung des Reflexionsvermögen, die der Schaltkreis (33) durchführt, die effektive Emissionsleistung dann berücksichtigt.

6. Vorrichtung gemäss einem der obgenannten Ansprüchen, gekennzeichnet dadurch, dass das zweite auf Wunsch eingebaute Profilometer (41) auf dem Flugzeitprinzip beruht, und mit dem Triangulationsprofilometer (1) derart verbunden ist, dass die Abtastrichtungen zwischen den beiden Systemen einen festen Winkel bilden, und in dieser Weise das Triangulationsprofilometer zur Kontrolle der Richtung des Flugzeitprofilometers dient.

7. Vorrichtung gemäss einem der vorigen Ansprüchen, dadurch gekennzeichnet, dass das taktile oder akustische Übertragungssystem aus einer begrenzten Zahl von taktilen oder akustischen Zellen besteht, wobei die Daten durch gleichzeitige Aktivierung mehrerer Zellen übermittelt werden; dabei ist der Bereich der messbaren Distanzen folgendermassen eingeteilt, nämlich zunächst in einen ersten groben Massstab, der einem Ensemble von Zellen entspricht, während ein zweites Teilensemble den ersten Massstab verfeinert, und so weiter, bis man entsprechend der Zahl der verfügbaren Zellen eine ausreichende Auflösung erreichen kann.

8. Vorrichtung gemäss den Ansprüchen 1,2 oder 7, dadurch gekennzeichnet, dass das taktile Übertragungssystem aus rechteckigen ein paar Quadratmillimeter grossen elektrotaktilen Zellen besteht, und die mit einer oder mehreren mehrere Quadratzentimeter grossen Konter-Elektrode verbunden sind; dabei wird die räumliche Lokalisierung der Elektroden auf der Haut innerhalb eines Teilensembles durch verschiedene Niveaus der elektrischen Signalintensität verstärkt, während eine Variation der Elektrodenfläche, der Übertragungsfläche Haut - Elektrode, und der Charakteristik des elektrischen Signals (Leitung, Intensität, Spannung) es ermöglicht, verschiedenen Teilensembles eine Vielzahl unterschiedlicher Empfindungen zuzuordnen.

9. Vorrichtung gemäss Ansprüchen 1,2 oder 7, dadurch gekennzeichnet, dass das akustische Übertragungssystem die Distanz durch ein Duo von zwei Instrumenten von verschiedener Klangfarbe kodiert, wobei das eine Instrument den Grobmassstab überträgt, das andere den Feinmasstab; das Reflexionsvermögen wird entweder mittels der akustischen Intensität des einen Instrumentes kodiert, oder durch eine andere Klangfarbe, dasselbe gilt eventuell für den Abtastwinkel.

D : A ...... 47 B

G : A ...... 48 B

**FIGURE 1**

**FIGURE 2**

**FIGURE 3**

**FIGURE 4**

**FIGURE 5**

FIGURE 6

FIGURE 7

FIGURE 8

FIGURE 9

**FIGURE 10**

**FIGURE 11**